Europäisches Patentamt

European Patent Office

Office européen des brevets

(19)

(11) Veröffentlichungsnummer: **0 188 406 B1**

(12) **EUROPÄISCHE PATENTSCHRIFT**
veröffentlicht nach Art. 158 Abs. 3
**EPÜ**

(45) Veröffentlichungstag der Patentschrift: **03.07.91**

(51) Int. Cl.⁵: **A23B 4/02**

(21) Anmeldenummer: **83903170.5**

(22) Anmeldetag: **30.09.83**

(86) Internationale Anmeldenummer:
**PCT/DE83/00168**

(87) Internationale Veröffentlichungsnummer:
**WO 85/01419 (11.04.85 85/09)**

(54) **VERFAHREN UND VORRICHTUNG ZUM HERSTELLEN VON NATURGEPÖKELTEN, ROHEN FLEISCHWAREN.**

(43) Veröffentlichungstag der Anmeldung:
**30.07.86 Patentblatt 86/31**

(45) Bekanntmachung des Hinweises auf die
Patenterteilung:
**03.07.91 Patentblatt 91/27**

(84) Benannte Vertragsstaaten:
**AT BE CH FR GB LI LU NL SE**

(56) Entgegenhaltungen:
**CH-A- 194 751
CH-A- 526 918
DE-C- 612 032
GB-A- 431 994**

(73) Patentinhaber: **LIESENFELD, Emil
Fleischwarenfabrikation Bopparder Strasse
65
W-5404 Bad Salzig(DE)**

Patentinhaber: **LIESENFELD, Edgar
Lämmergasse 6
W-5404 Bad Salzig(DE)**

(72) Erfinder: **LIESENFELD, Emil
Fleischwarenfabrikation Bopparder Strasse
65
W-5404 Bad Salzig(DE)**
Erfinder: **LIESENFELD, Edgar
Lämmergasse 6
W-5404 Bad Salzig(DE)**

(74) Vertreter: **Kodron, Rudolf S., Dipl.-Ing.
Adam-Karrillon-Strasse 30
W-6500 Mainz(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und zugehörige Vorrichtungen zum Herstellen von naturgepökelten, rohen Fleischwaren mittels Ansalzen in einer teilweise salzgefüllten Drehtrommel.

Bei der herkömmlichen Herstellung von haltbaren, rohen Pökelfleischwaren erfolgt eine sehr zeitraubende, sich über mehrere Wochen erstreckende Hauptsalzung, bei welcher die Fleischstücke lagenweise in Zwischenlagen von Pökelsalz lagern und umgesetzt werden. Diese sogenannte Trockensalzung hat neben dem großen Zeitaufwand den Nachteil, daß die in den Fleischstücken gewünschte, gleichmäßige Salzverteilung immer ungleichmäßig sein muß, da sie von der Größe und der Qualität der Fleischstücke und vielen anderen Faktoren abhängt. Es kommt dabei in der Pegel zu einer Übersalzung und einer entsprechenden Geschmackseinbuße bei dem Endprodukt.

Der Erfindung liegt die Aufgabe zugrunde, dieses zeitraubende Verfahren mit dem Ziel abzuändern, daß Pökelfleischwaren nicht nur wesentlich rascher als bisher, sondern auch salzärmer und gleichmäßiger in der Endqualität als bisher möglich, hergestellt werden können.

Gelöst wird diese Aufgabe nach der Erfindung durch Aufschichten zweier oder mehrerer Lagen von dicht aneinanderliegenden angesalzenen Fleischstücken übereinander in einem druckfesten Behälter mit einem senkrecht frei bewegbaren Deckel, der mit Hilfe eines an ihm angreifenden, maschinellen Antriebsaggregat einen periodisch anschwellenden Druck auf das Fleischstück-Gesamtpaket ausübt, wobei die Zwischenräume zwischen den Fleischstücken während des mehrstündigen periodischen Druckwechsels mit eigener ausgepreßter Pökellake ausgefüllt sind und wonach die derart massierten Fleischstücke aus dem Behälter herausgenommen und in bekannter Weise im Lufttrocknungs-und/oder Räucherverfahren endbehandelt werden.

Zweckmäßig sind zwischen zwei oder mehreren Zeitabschnitten eines periodischen Druckwechsels Ruhezeiten vorgesehen.

Die Druckmaxima und/oder die Druckminima können kurzzeitig konstant gehalten werden.

Die erfindungsgemäße Vorrichtung zur Durchführung des Verfahrens umfaßt einen druckfesten Behälter und einen durch ein Antriebsaggregat senkrecht auf- und niederbewegbaren Deckel.

Der Deckel hat vorteilhaft ein Gewicht von etwa dem zehnten Gewichtsteil des Fleischstück-Gesamtpakets.

Das oben beschriebene Verfahren ersetzt die bisher übliche Trockensalzung und die damit verbundene Handarbeit und spart den hierfür nötigen Zeitaufwand ein. Die vorgeschlagene hydraulische Massage der Fleischstücke führt zu einer gleichmäßigen Salzverteilung in den Fleischstücken innerhalb kürzestmöglicher Zeit, wobei die Fleischstruktur unbeschädigt erhalten bleibt.

Am Ende der Massage in dem salzhaltigen eigenen Saft des Fleisches hat sich der Salzgehalt der Eigenlake etwa auf die Hälfte vermindert.

Das bislang für die Herstellung von rohen Pökelfleischwaren ungeeignete Fleisch mit einem PH-Wert von mehr als 5,8 bis 6 kann mit Hilfe des vorgeschlagenen Verfahrens und einer anderen Pökelhilfsstoffzusammensetzung ebenfalls zu Rohpökelware verarbeitet werden. Es bedarf dann lediglich noch einer Verlängerung der Massagezeit.

Ferner wurde festgestellt, daß das Massageverfahren zu einem meßbaren Nitritabbau führt. Hierdurch wird dem Aufbau von Nitrosaminen im menschlichen Körper entgegengewirkt, die nach neu-erer Auffassung als karzinogene Stoffe anzusprechen sind.

## Ansprüche

1. Verfahren zum Herstellen von naturgepökelten, rohen Fleischwaren,
   dadurch gekennzeichnet, daß
   - nach dem in beliebiger Weise durchgeführten trockenen Ansalzen und vor der Endbehandlung der einzelnen Fleischstücke nach einem beliebigen der bekannten Lufttrocknungs- und/oder Räucherverfahren
   - ein Aufschichten zweier oder mehrerer Lagen von dicht aneinanderliegenden angesalzenen Fleischstücken übereinander
   - in einem druckfesten Behälter mit einem senkrecht frei bewegbaren Deckel,
   - der mit Hilfe eines an ihm angreifenden, maschinellen Antriebsaggregats
   - einen mehrstündigen periodisch anschwellenden Druck auf das Fleischpaket ausübt, stattfindet,
   - wobei die Zwischenräume zwischen den Fleischstücken mit eigener ausgepresster Pökellake gefüllt sind.

2. Verfahren nach Anspruch 1,
   dadurch gekennzeichnet, daß zwischen zwei oder mehreren Zeitabschnitten eines periodischen Druckwechsels Ruhezeiten vorgesehen sind.

3. Verfahren nach den Ansprüchen 1 oder 2,
   dadurch gekennzeichnet, daß die Druckmaxima und/oder Druckminima kurzzeitig konstant gehalten werden.

4. Vorrichtung zur Durchführung des Verfahrens nach einem der vorausgehenden Ansprüche 1 bis 3, gekennzeichnet durch einen druckfesten Behälter und einen durch ein Antriebsaggregat senkrecht auf- und niederbewegbaren Deckel.

5. Vorrichtung nach Anspruch 4, dadurch gekennzeichnet, daß das Deckelgewicht etwa dem zehnten Gewichtsteil des Fleischstück-Gesamtpakets entspricht.

## Claims

1. Process for producing naturally salted raw meat products, characterised in that
   - after the dry salting carried out in any desired manner and prior to the final treatment of the individual pieces of meat in accordance with any desired one of the known air-drying and/or smoking process there takes place
   - a layering of two or more layers of closely juxtaposed salted pieces of meat one above the other
   - in a pressure-resistant container having a lid which can be freely moved perpendicularly
   - which with the aid of a mechanical driving unit acting on it
   - exerts, over several hours duration, a periodically increasing pressure on the packed meat,
   - in which respect the gaps between the pieces of meat are filled with its own squeezed-out pickling brine.

2. Process according to claim 1, characterised in that rest pauses are provided between two or more periods of time of periodical change in pressure.

3. Process according to claims 1 or 2, characterised in that the pressure maxima and/or pressure minima are kept constant for a short time.

4. Apparatus for carrying out the process according to one of the preceding claims 1 to 3, characterised by a pressure-resistant container and a lid which can be moved perpendicularly up and down by a drive unit.

5. Apparatus according to claim 4, characterised in that the weight of the lid corresponds to approximately one-tenth of the weight of the entire packed pieces of meat.

## Revendications

1. Procédé de fabrication de viande crue salée naturellement, caractérisé en ce que,
   - après le salage à sec réalisé d'une manière quelconque et avant le traitement final des différents morceaux de viande selon l'un quelconque des procédés connus de séchage à l'air et/ou de fumage,

   est effectué

   - un empilage de deux ou plusieurs couches de morceaux de viande salés et serrés les uns contre les autres
   - dans un récipient résistant à la pression muni d'un couvercle librement mobile verticalement
   - qui, à l'aide d'un groupe d'entraînement mécanique qui le sollicite,
   - exerce une pression de plusieurs heures augmentant périodiquement sur l'ensemble du bloc de viande,

   les interstices entre les morceaux de viande étant comblés avec la propre saumure exprimée de la viande.

2. Procédé conforme à la revendication 1, caractérisé en ce qu'entre deux ou plusieurs périodes d'une alternance périodique de pressions sont prévus des temps de repos.

3. Procédé conforme aux revendications 1 ou 2, caractérisé en ce que les maxima de pression et/ou les minima de pression peuvent être maintenus constants pendant de courtes durées.

4. Dispositif pour réaliser le procédé conforme à l'une des revendications précédentes 1 à 3, caractérisé par un récipient résistant à la pression et un couvercle pouvant être levé et abaissé verticalement par un groupe d'entraînement.

5. Dispositif conforme à la revendication 4, caractérisé en ce que le poids du couvercle correspond environ à la dixième partie en poids de l'ensemble du bloc de viande.